# EUROPEAN PATENT APPLICATION

(11) **EP 0 965 675 A1**
(43) Date of publication of application: **22.12.1999**
(21) Application number: 99110514.9
(22) Date of filing: 31.05.1999
(51) Int. Cl.: D06F 37/20, F16F 15/03, F16F 7/08

(54) **Device for controlling the oscillations of tub-drum unit for washing-machines, in particular clothes washing machines**

(30) Priority: 16.06.1998 IT TV980090
(71) Applicant: R.& D.S. S.r.l., 33084 Cordenons (PN) (IT)
(72) Inventor: Fornasari, Paolo, 33084 Cordenons (PN) (IT)
(74) Representative: Dalla Rosa, Adriano

(57) **Abstract**

Arrangement for controlling the oscillations of the drum-tub assembly of washing machines in which said drum is driven to rotate at high spin-extraction speeds. In this arrangement, the vibration dampers (24) of the washing machine are associated with supplementary braking means and, in a version, also with electronic control means (29) connected operatively with sensor means (28) adapted to detect the oscillations of the drum-tub assembly, so as to determine a supplementary braking action exterted on said assembly in accordance with the intensity of the oscillations of said assembly, as detected by said sensor means (28), through electronic control means (29).

Described are various embodiments of the arrangement, along with the particular conformation of the vibration dampers that constitute a component part thereof.

## Description

The present invention refers to an arrangement for controlling the oscillations of the drum-tub assembly of washing machines, in particular household clothes washing machines, adapted to effectively dampen the oscillatory displacements of such an assembly when the drum is operated to rotate at high spin-extraction speeds.

Various types of vibration and shock absorbing devices are known in the art for use in connection with the need to dampen the oscillations of drum-tub assemblies of washing machines of the above cited kind, which are generated when the drum is driven to rotate at high spin-extraction speeds. These devices are generally known to be connected between the lower portion of each such drum-tub assembly and the lower portion, or base, of the outer cabinet of the related washing machine. They are also generally known to be substantially constituted by an innerly hollow cylinder and a cylindrical rod provided with friction surfaces of a suitable material, which is adapted to slide reciprocatingly within the inner cavity of said cylinder whenever said assembly is caused to undergo significant oscillatory displacements by said drum being driven to rotate at the various washing and spin-extraction speeds, in order to thereby bring about a braking action adapted to dampen such oscillations.

These vibration absorbing devices are generally suitable for use in washing machines capable of performing spin-extraction processes at relatively high revolution speeds of their rotating drum (ie. speed of up to approx. 900 rpm). They however prove rather critical when used in conjunction with such washing machines operating at higher spin-extraction speeds of their rotating drum as they are currently being manufactured in view of improving clothes drying performance. Under such conditions, in fact, it proves rather difficult to succeed in effectively dampening the vibrations of the drum-tub assembly through very intensive braking actions.

The present invention has the purpose of overcoming the application-related limitations of the current types of vibration dampening devices by providing an arrangement for controlling the oscillations of the drum-tub assembly of such washing machines, wherein said arrangement is adapted to bring about a sure, effective dampening of the same oscillations regardless of the rotating speed of the drum, ie. at any rotating speed thereof, and in particular under conditions of extremely high rotating spin-extraction speeds at which the drum itself may be driven to dry the clothes.

Such a vibration controlling arrangement is provided with the features and construction characteristics that are substantially described below, with particular reference to the appended claims.

The features and advantages of the present invention will anyway be more readily understood from the description that is given below by way of non-limiting example with reference to the accompanying drawings, in which:
- Figure 1 is a schematical front view of a washing machine provided with a pair of vibration dampers associated with the control arrangement according to the present invention in a first embodiment thereof;
- Figure 2 is a partially cross-sectional front view of one of the vibration dampers shown in Figure 1, in a first embodiment thereof;
- Figure 3 is a partially cross-sectional plan view of the vibration damper shown in Figure 2;
- Figure 4 is a side cross-sectional view of the vibration damper shown in Figure 3;
- Figure 5 is a perspective exploded view of the various component parts of the vibration damper illustrated in Figures from 2 to 4;
- Figure 6 is a perspective view of the vibration damper illustrated in Figures from 2 to 4, as shown in its assembled state;
- Figure 7 is a partially cross-sectional front view of one of the vibration dampers shown in Figure 1, in a second embodiment thereof;
- Figure 8 is a side view of the vibration damper shown in Figure 7, as cross-sectioned along the A-A line;
- Figure 9 is a schematical side view of one of the vibration dampers shown in Figure 1, in a third embodiment thereof;
- Figure 10 is a schematical view of a variant in the construction of the vibration damper shown in Figure 9;
- Figures 11 to 13 are schematical views of further variants in the construction of the vibration damper shown in Figure 9;
- Figure 14 is a schematical front view of a washing machine provided with a pair of vibration dampers associated with the oscillation control arrangement according to the present invention, shown here in a second embodiment thereof;
- Figure 15 is a partially cross-sectional front view of one of the vibration dampers shown in Figure 14, in a first embodiment thereof;
- Figure 16 is a partially cross-sectional plan view of the vibration damper shown in Figure 15;
- Figure 17 is a cross-sectional side view of the vibration damper appearing in Figure 16;
- Figure 18 is a partially cross-sectional front view of an enlarged construction detail of one of the vibration dampers shown in Figure 14;
- Figure 19 is a side view of the vibration damper shown in Figure 18, as cross-sectioned along the A-A line;
- Figure 20 is a partially cross-sectional front view of one of the vibration dampers shown in Figure 14, in a second embodiment thereof, as displaced into an operating position thereof;
- Figure 21 is a partially cross-sectional plan view of the vibration damper shown in Figure 20;
- Figure 22 is a front view of the vibration damper of Figure 20, illustrated as displaced into another operating position thereof;
- Figure 23 is a cross-sectional front view of a construction detail of the vibration damper shown in Figure 22.

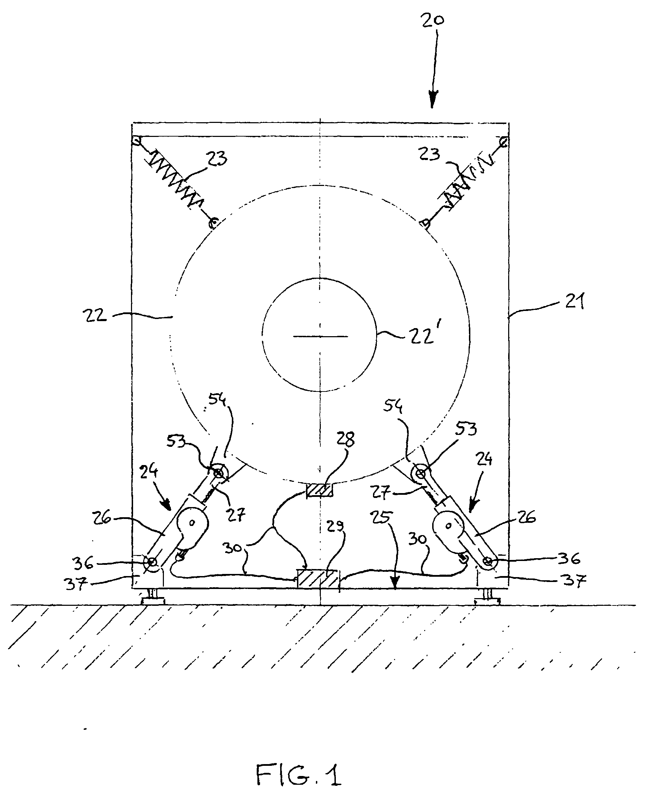

Figure 1 is shown to schematically illustrate a washing machine, and in particular a household clothes washing machine 20 that comprises an outer cabinet 21 resting on the floor with its lower portion and accomodating a so-called washing assembly constituted by a washing tub 22 and a washing drum 22' housed inside said tub, wherein said washing assembly is supported in the machine by means of upper suspension springs 23 attached between the upper portion of the outer cabinet 21 and the tub 22, and lower vibration dampers 24 mounted between said tub and the lower portion or base 25 of the outer cabinet, each one of said vibration dampers being formed by an innerly hollow casing 26 and a rod 27 capable of reciprocatingly sliding in said inner cavity of said casing, in which the free ends of the casing and the rod are linked with the base 25 of the outer cabinet 21 of the washing machine and the lower portion of the washing tub 22, respectively.

The washing machine further comprises an oscillation control arrangement according to the present invention, which is provided to dampen, in conjunction with the vibration dampers 24, the oscillatory displacements which the drum-tub assembly is caused to undergo when the drum is driven to rotate at the various laundering, ie. clothes washing and spin-extraction speeds. In a first embodiment thereof, such an oscillation control arrangement is substantially constituted by the same vibration dampers, in a construction thereof as described in a greater detail below, as well as by at least a sensor 28, adapted to detect the off-balance conditions of the drum-tub assembly, and an electronic control unit 29, which are connected to each other via electric conductors 30 and adapted to interact with each other in the manner that is described in greater detail further on.

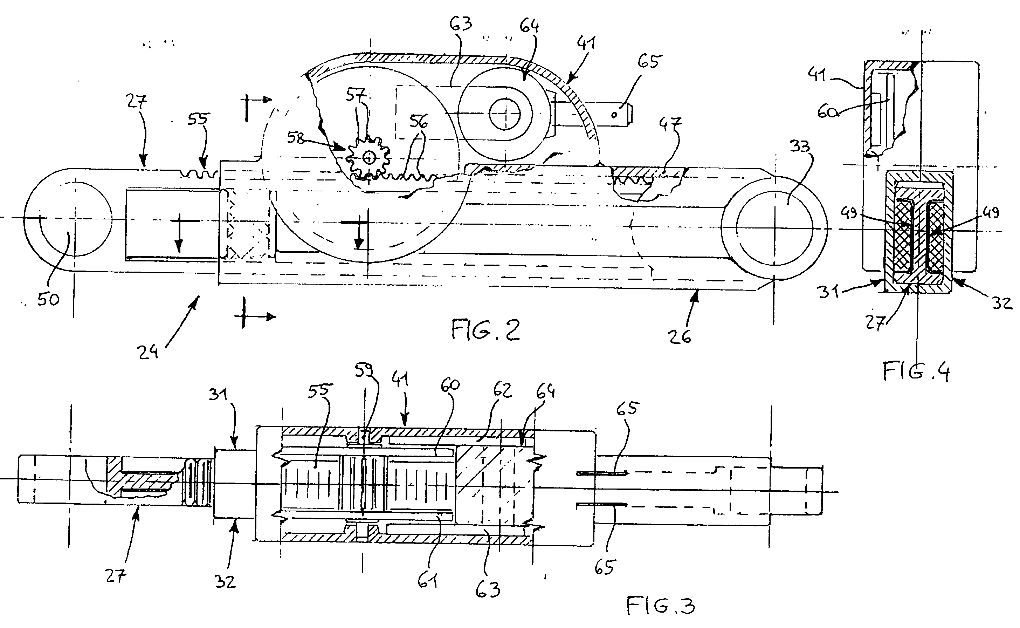

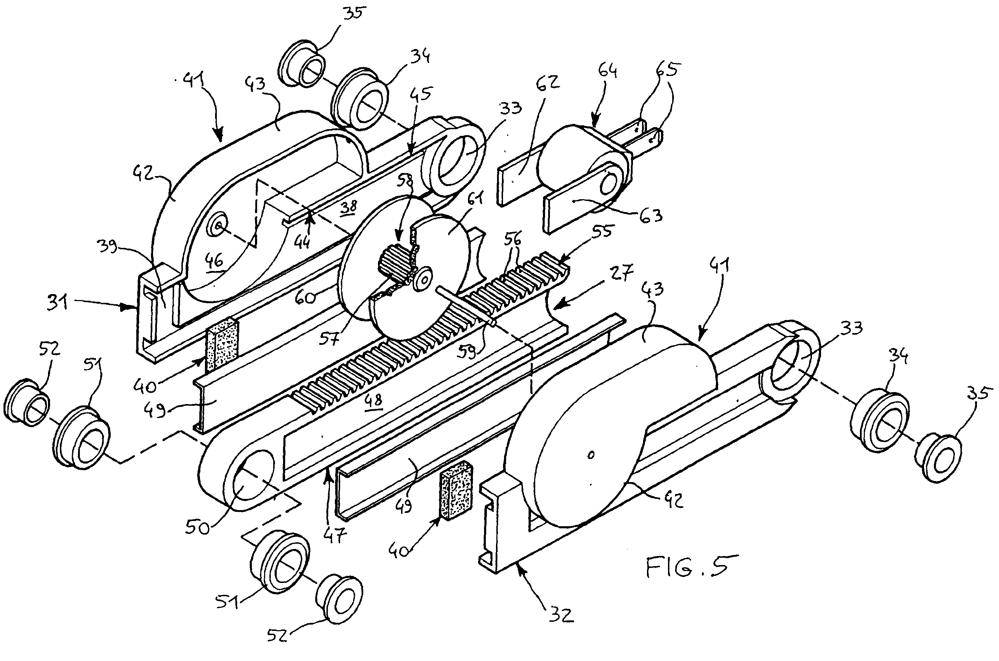

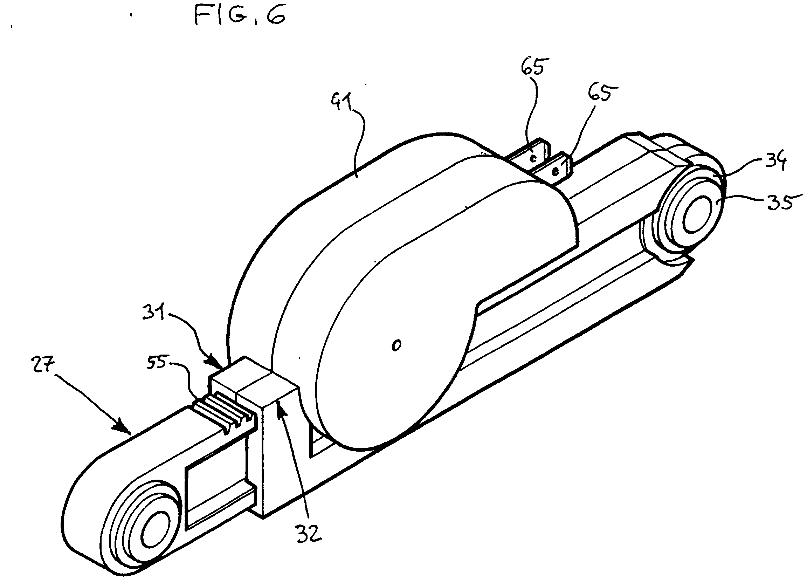

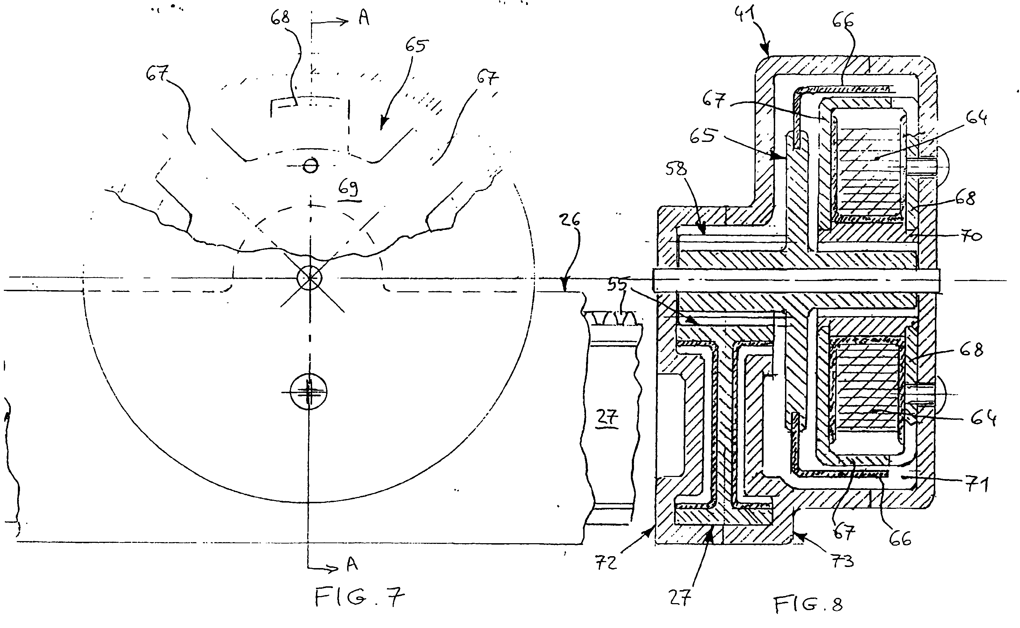

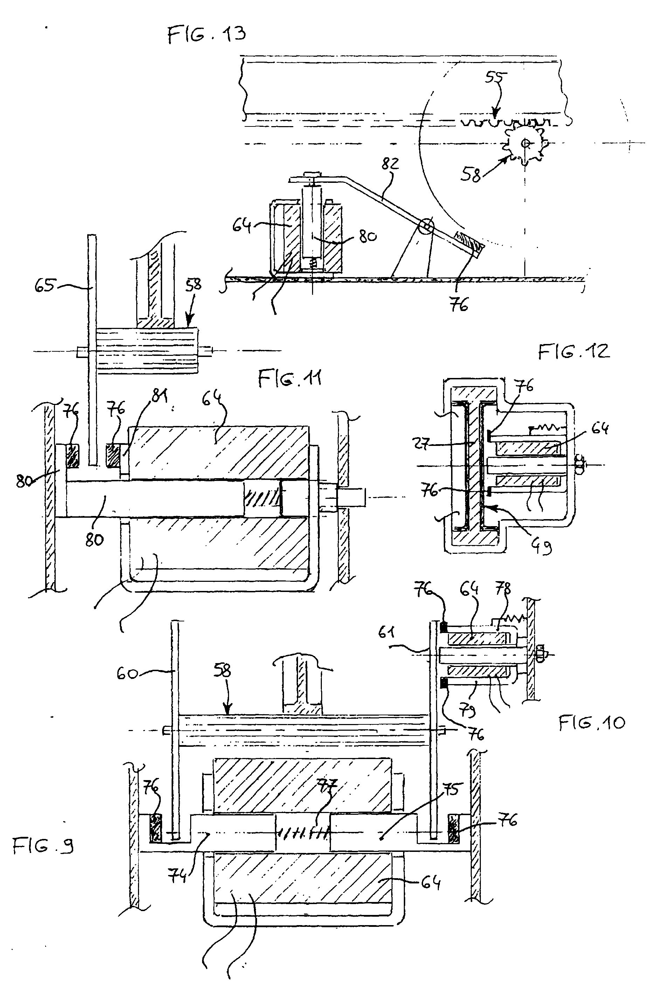

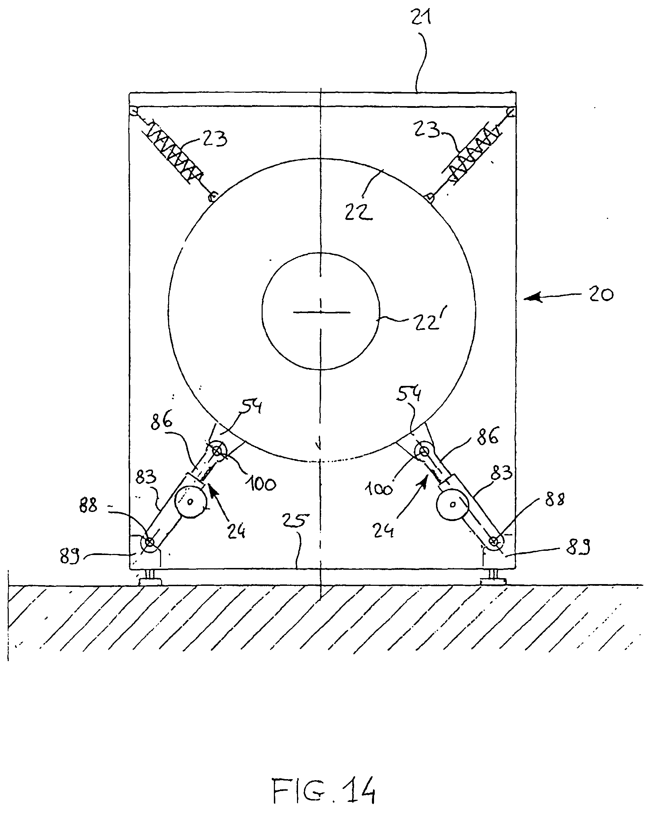

Figures 2 to 6 are in turn shown to illustrate one of the vibration dampers 24 (two vibration dampers in this case), whose hollow casing 26 is formed by two half-shells of plastic material 31 and 32 in a box-like, rectilinear and elongated shape, which are similar to and symmetrically arranged with respect to each other, and are adapted to be joined to each other in a per sè known manner, thereby delimiting an inner cavity (not shown) between them to accomodate the rod 27, wherein an end portion thereof is open so as to enable the rod 27 to be inserted in said inner cavity, and a closed end portion thereof is provided with a transversal through-aperture 33 for the passage therethrough of corresponding bushes 34 and 35 and a trunnion 36 (see Figure 1) provided to join said casing 26 to corresponding support brackets 37 attached to the base 25 of the outer cabinet of the machine.

In particular, the above mentioned half-shells 31 and 32 are so shaped as to appear recessed externally, in such a manner as to define a respective projecting surface 38 on their inside, in which there is provided a corresponding receding seat 39 in correspondence of the free end portion of the casing 26 to accomodate at least a respective slab 40 of grease-impregnated microcellular polyurethane foam or any other suitable anti-friction material, such a slab being arranged flush with the corresponding inner projecting surface 38 so as to able to thereby bring about a braking action against the rod 27, as this will be described in greater detail further on, as well as to define a case 41 along one of the longitudinal edges thereof, wherein said case is shaped to include a circular portion 42 that blends into an elongated appendix 43 that forms a curve at its terminal portion. Furthermore, said case has an inner longitudinal edge 44 that is joined and co-planar with the contiguous longitudinal edge 45 of the corresponding half-shell, and has further a thickness that is larger than the one of the same half-shell so as to thereby define a recessing seat 46 adapted to accomodate the component parts that will be described further on.

The rod 27 is in turn made out of a single piece 47 having a box-like rectilinear and elongated shape. It is provided externally with a recessing portion extending almost throughout the longitudinal extension thereof with a cross-sectional profile in the shape of a double T, thereby forming corresponding recessing seats 48 adapted to accomodate a respective metal strip 49 opposing both the inner projecting surfaces 38 and the friction slabs 40 and adapted to come into contact with the latter during the reciprocatingly sliding movement of the rod in the half-shells 31 and 32, thereby bringing about a braking effect.

Such rod 27 is furthermore provided at its free end portion with a transversal through-hole 50 for the passage therethrough of corresponding bushes 51 and 52 and a trunnion 53 (see Figure 1) provided to join the same rod to corresponding support brackets 54 attached to the the lower portion of the tub 22, as well as with a rack-like portion 55 along its longitudinal edge facing the case 41 of said half-shells. The teeth 56 of said rack are adapted to engage corresponding teeth 57 of a pinion 58 rotating about a transversal pin 59 which is housed in the half-shells 31 and 32 and onto which there are press-fitted two side metal disks 60 and 61, preferably of copper or aluminium, having a larger size than the pinion 58 and anyway such as to be able to be accomodated and enclosed within the corresponding seats 46 of the respective cases 41 when said half-shells are joined to each other (see Figure 6). In this way, the reciprocatingly sliding movement of the rod 27 caused by the oscillatory displacements of the drum-tub assembly during the operation of the washing machine brings about on the one side a braking action owing to the friction of the friction slabs 40 against the metal strips 49 of the rod 27 and, on the other side, a rotation of the pinion 58 originated by the displacement of the rack portion 55 associated to the same rod, under resulting rotation of the metal disks 60 and 61 that are positioned between two pole pieces 62 and 63 provided in a parallel arrangement and spaced from each other by a gap corresponding to at least an electromagnet 64 situated on a side of the disk-pinion assembly and housed in the corresponding seats 46 of the cases 41, when said half-shells are joined to each other (see Figure 6).

The above cited electromagnet 64 is in turn provided with fixed connecting tabs 65 protruding outwardly from the cases 41 for the connection of the electric conductors 30 leading to the sensor 28 and the electronic control unit 29, so that said electromagnet is capable of being energized and de-energized as described in greater detail further on, thereby generating a magnetic flux between said pole pieces 62 and 53 in the first case, and discontinuing said magnetic flux between the same pole pieces in the second case.

In these circumstances, when the electromagnet 64 is energized, the metal disks 60 and 61 rotate in the magnetic flux generated between the polar pieces 62 and 63 and, owing to this rotation, eddy currents (or Foucault currents) are generated in the same disks which tend to oppose such a rotation thereof, thereby bringing about a braking action that is in a proportion with the intensity of the magnetic field being generated, and which, by adding up to the braking action brought about by the friction of the slabs 40 against the metal strips 49 of the rod 27, considerably boosts the dampening action exerted on the oscillatory displacements of the drum-tub assembly by the vibration dampers 24. In an advantageous manner, such a braking effect is conferred a particularly high intensity by providing metal disks 60 and 61 having such large diameters as to be capable of rotating at a peripheral speed that is greater than the sliding speed of the rod, so as to thereby producing greater eddy current losses in the same disks.

In this case, during the rotation of the drum at the various washing and spin-extraction speeds thereof, the resulting mechanical oscillations and off-balance condition of the drum-tub assembly are constantly detected by the sensor 28, which may be of a traditional type as commonly used even in conjunction with prior-art balancing system, and this sensor then is capable of generating corresponding electric signals that are proportional to the intensity of the so detected mechanical oscillations, wherein said electric signals are then processed by said electronic control unit 29 and converted accordingly into electric voltages of a correspondingly variable intensity that are applied to the electromagnet 64 under resulting generation, by this same electromagnet, of magnetic fluxes which have an intensity that is proportional to said oscillations and are therefore capable of determining additional braking forces of an intensity that is also proportional in such a manner as to be able to thereby ensure an effective and sure dampening of said mechanical oscillations at any rotating speed of the drum and, in particular, at the extremely high spin-extraction speeds thereof.

It should furthermore be duly noticed that, thanks to the presence of the braking system constituted by the slabs 40 acting against the metal strips 49, each vibration damper brings always about a braking action that ensures a dampening, albeit of a reduced intensity, of the oscillations of the drum-tub assembly until the inertial force owned by said assembly is fully depleted, even in the case that, for any reason whatsoever, the electromagnet 64 fails to be energized and, as a result, is not able to bring about the additional braking action it usually determines on the rotating disks 60 and 61.

It will be readily appreciated that braking actions can be brought about with the use of disks and polar pieces that differ from the ones that have been described above merely by way of example as far as their number, shape and physical arrangement are concerned, without this meaning a departure from the scope of the present invention.

Figures 7 and 8 can now be noticed to schematically illustrate a second embodiment of the vibration damper of the oscillation control arrangement according to the present invention, which has substantially the same configuration as the afore described vibration damper and differs from the latter owing solely to a different construction of the supplementary braking system which in this case is no longer constituted by two disks, but by a single disk 65 made of a metal material such as copper or aluminium, which is integral with the pinion 58 and is fixed on a side thereof, wherein said disk has a terminal portion 66 that is bent orthogonally and is situated coaxially and externally with respect to a plurality of fixed polar pieces 67 and 68 provided in a mutually staggered arrangement along the circumference of respective fixed polar disks 69 and 70 embracing the electromagnet 64 from the two sides thereof and housed in the corresponding circular seat 71 of the case of the half-shells 72 and 73 which are structurally shaped in a different manner with respect to the previously described half-shells, so that the polar pieces 67 of the polar disk 69 turn out to be staggered with respect to and arranged between one and the other polar piece 68 of the remaining polar disk 70, thereby giving rise to a crossed-pole configuration of the Lundell type adapted to enable the disk 65 to bring about effective braking actions during the rotation thereof caused by the displacement of the rack portion 55.

Similarly, by replacing the disk 65 with a disk made of a material with a high coercive force, such as for instance a hysteretic nickel-aluminium steel alloy or a FeCrCo alloy (such as for instance the alloy usually available on the market under the Crovac trade-name), a braking action of the so-called magnetic hysteresis type is obtained both when the disk is actuated rotatably and when it is on the contrary kept motionless, inasmuch as the electromagnet 64 is in both cases energized according to the afore described criteria.

Figure 9 can at this point be noticed to illustrate a third embodiment of a vibration damper of the oscillation control arrangement according to the present invention, in which it can be noticed that even in this case said vibration damper is substantially similar to the one described with reference to Figures 2 to 6 and differs therefrom owing solely to the braking action of the rotation of the disks 60 and 61 being brought about in a different manner, ie. by providing an electromagnet 64 with two cores 74 and 75 which are mutually opposing each other and are provided, at their free ends, with respective friction slabs 76 facing the opposed disk and acting by establishing a friction-causing contact therewith when the electromagnet is energized and, as a result, the cores 74 and 75 are attracted towards each other against the action of a central counteracting spring 77 biasing them in such a manner as to cause the slabs 76 to be moved away from the corresponding disk. The remaining Figures 10 to 13 illustrate further variants in the construction of the vibration damper of the oscillation control arrangement according to the present invention. In particular, in the illustration shown in Figure 10 it can be noticed that the electromagnet 64 is provided with polar pieces 78 and 79 at the end portions of which there are applied friction slabs 76 facing the opposing disk, which is in turn made of a ferromagnetic material, such as for instance steel, so that energizing the electromagnet causes a mutual attraction to be brought about between the disk and the polar pieces with a force that is proportional to the power generated by the electromagnet and, therefore, with a corresponding braking action.

In the illustration appearing in Figure 11 it can be noticed that there is provided a single disk 65 which rotates between two friction slabs 76 facing the opposed side surfaces of the same disk, wherein one of such slabs is supported by the single moving core 80 of the electromagnet 64 and the other one by the body 81 of the same electromagnet. Said slabs are moved into frictionally contacting the disk when the electromagnet is energized, thereby producing a balanced braking action.

In Figure 12 the electromagnet-polar pieces assembly can be noticed to be substantially similar to the assembly described with reference to Figure 10, except for the fact that the friction slabs 76 are adapted to act against the metal strips 49 that are applied along the rod 27, as this has been illustrated earlier in this description.

Finally, in Figure 13 the single core 80 of the electromagnet 64 can be noticed to be connected to the end portion of a lever 82 having its fulcrum on a half-shell and provided, at the other end portion thereof, with a friction slab 76 acting against the peripheral surface of the disk, thereby bringing about a braking action of considerable extent.

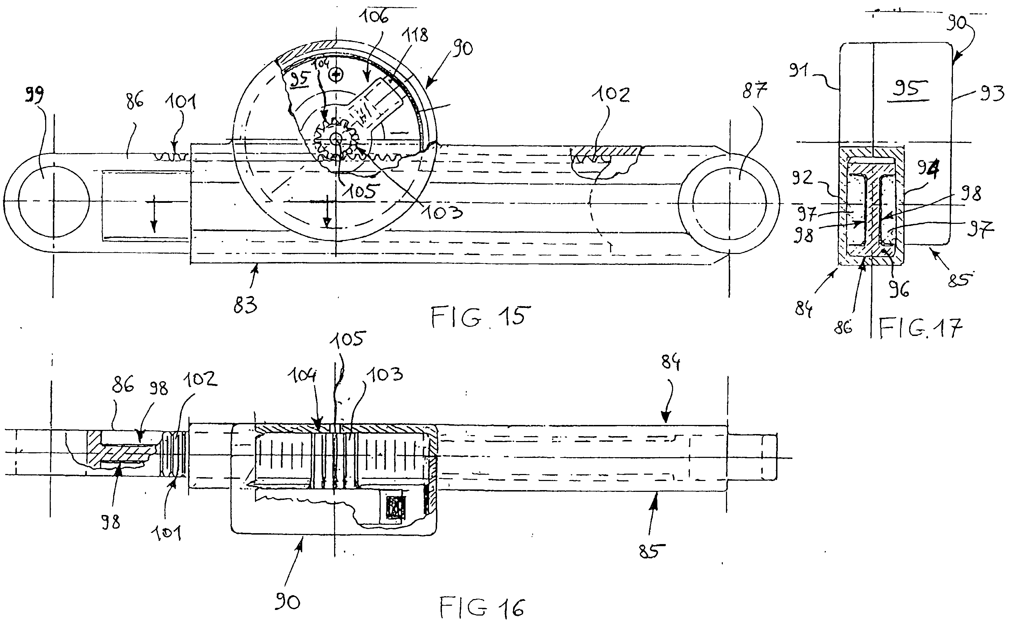

Figure 14 schematically illustrates a washing machine, and in particular a household clothes washing machine 20 similar to the machine shown in Figure 1, which comprises an oscillation control arrangement according to the present invention in a second embodiment thereof, provided to the same purposes as the afore described oscillation control arrangement and constituted substantially by the same vibration dampers 24, which have the conformation as described with particular reference to Figures 15 to 19, which are shown to illustrate one of the two vibration dampers of the washing machine in a first embodiment thereof, wherein said vibration damper has a hollow casing 83 that is formed by two mutually symmetrical half-shells of plastic material 84 and 85 in a rectilinear, elongated box-like shape, which are adapted to be joined to each other in a per sè known manner, thereby delimiting an inner cavity therebetween (not shown) to accomodate the rod 86, wherein an end portion thereof is open so as to enable the rod 86 to be inserted in said inner cavity, and a closed end portion thereof is provided with a transversal through-aperture 87 for the passage therethrough of corresponding bushes (not shown) and a trunnion 88 (see Figure 14) provided to join said casing 83 to corresponding support brackets 89 attached to the base 25 of the outer cabinet of the machine.

In particular, said half-shells 84 and 85 are so shaped as to define an innerly hollow enclosed case 90 along the longitudinal edges thereof, which has a thickness that is greater than the thickness of the casing 83, wherein said case is provided in a circular shape and, in the illustrated example, it is provided in correspondence of the free end portion of the casing 83, an outer edge 91 of said case being further co-planar with and joined to the corresponding outer edge 92 of a half-shell 84, whereas the other outer edge 93 thereof is joined to and protruding from the outer edge 94 of the other half-shell 85, so that said case is capable of thereby defining an inner seat 95 adapted to accomodate the component parts that will be described further on.

The rod 86 is in turn made out of a single piece 96 having a box-like rectilinear and elongated shape. It is provided externally with a recessing portion extending almost throughout the longitudinal extension thereof with a cross-sectional profile in the shape of a double T, thereby forming corresponding recessing seats 97 adapted to accomodate a possible metal reinforcement 98 aimed at conferring greater strength and stiffness.

Such rod 86 is furthermore provided at its free end portion with a transversal through-hole 99 for the passage therethrough of corresponding bushes (not shown) and a trunnion 100 (see Figure 14) provided to join the same rod to corresponding support brackets 54 attached to the the lower portion of the tub 22, as well as with a rack-like portion 101 along its longitudinal edge facing the case 90 of said half-shells. The teeth 102 of said rack are adapted to engage corresponding teeth 103 of a rotating pinion 104 that is firmly joined with a transversal pin 105 supported by the half-shells 84 and 85.

Such a rotating pinion 104 is in turn integral with a pair of elongated expansion pieces 106 and 107, which are similar to each other and housed in the half-shell 85 having a greater thickness than the case 90, wherein said expansion pieces are arranged at a distance from each other along the pin 105 and extend orthogonally and radially with respect to the same pin, thereby forming two respective rectilinear half-portions 108, 109 and 110, 111 that are symmetrical to each other and blend into a respective central enlarged portion 112 and 113 having a circular shape.

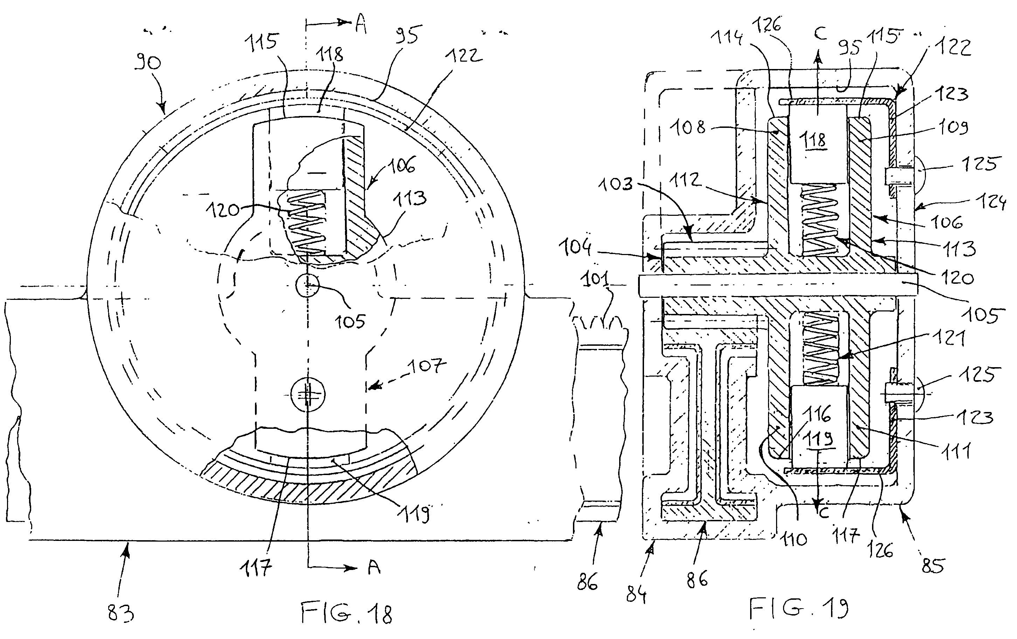

Furthermore, these elongated expansion pieces 106 and 107 extend to such an extent that their respective free curved end portions 114, 115 and 116, 117 are at a slight distance from the opposite inner circular walls of the inner seat 95 of the same case (see Figures 18 and 19), so that such end portions are not able to establish any contact with said inner walls during the rotation of said elongated expansion pieces.

In the gap provided between the half-portions of the respective elongated expansion pieces 106 and 107 there is furthermore housed at least a corresponding heavy mass 118 and 119 that is made of appropriate material with a high coefficient of friction that is capable of moving into different expansion positions along the same accomodating gap throughout the length of said rectilinear half-portions 108, 109 and 110, 111 in accordance with the speed at which said elongated expansion pieces rotate and, therefore, the centrifugal force exerted on the masses during the operation of the washing machine.

These centrifugal masses 118 and 119 are furthermore linked with the elongated expansion pieces via a corresponding compression spring 120 and 121 which is sized and designed so as to bias them radially in the direction C against a metal bell 122 provided inside the case 90 and shaped to include a vertical portion 123 fixed along the whole extension of the front wall 124 of said case by means of screws 125 or similar means, and a horizontal portion 126 having a circular shape and covering the circular inner walls of the seat 95 of the case over the entire extension thereof, this being the portion against which each mass is actually pushed by the related spring.

In particular, these compression springs are so sized and designed as to be able to always keep the therewith associated masses pushed against the metal bell 122, with a pre-set compression force, both when the machine is not operating and when it is on the contrary operating, in a condition in which said masses do not expand radially, thereby bringing about a continuous braking action owing to the friction effect generated by the compression of said masses against the metal bell.

In this manner, the reciprocatingly sliding movement of the rod 86 induced by the oscillatory displacements of the drum-tub assembly of the washing machine during the operation thereof causes the pinion 104 to rotate following the displacement of the rack portion 101 associated to said rod, under resulting rotation of the elongated expansion pieces 106 and 107 and the centrifugal masses housed therein.

In these circumstances, therefore, as long as no oscillatory displacements of the drum-tub assembly are brought about to such an intensity as to cause the rod 86 to reciprocatingly slide in the hollow casing 83, owing to the washload being evenly distributed inside the drum or the same drum being driven to rotate at relatively high spin-extraction speeds, the pinion 104 and the elongated expansion pieces 106 and 107 are not actuated, ie. caused to rotate, while the centrifugal masses 118 and 119 do not expand, so that such masses are kept pressed by the respective springs against the bell 122 and are so able to perform their normal braking action.

Conversely, when such oscillatory displacements of the drum-tub assembly are on the contrary brought about owing to an uneven, unbalanced distribution of the washload in the drum or the same drum being driven to rotate at very high spin-extraction speeds, ie. in excess of 900 rpm, the resulting reciprocatingly sliding movement of the rod 86 in the hollow casing 83 determines a rotation of the pinion 104, the elongated expansion pieces 106 and 107 and the centrifugal masses 118 and 119, so that the latter are able to expand radially with differing compression forces that are proportional to the centrifugal forces generated in the expansion pieces themselves in accordance with the intensity of the above cited oscillatory displacements and the rotation speed of the drum, thereby determining a condition in which said masses are further compressed against said bell so as to bring about in this manner an additional braking action against the same bell to an extent that is sufficient to effectively dampen the oscillations of the drum-tub assembly.

It can at this point be readily appreciated that the oscillation control arrangement according to the present invention is actually capable of always ensuring braking actions that are adequate to handle with any speed at which the drum may also rotate, as well as any off-balance condition which the drum-tub assembly may also be driven into, thanks to the centrifugal expansion of the masses 118 and 119 and their resulting additional braking action against the case 90 of the vibration dampers.

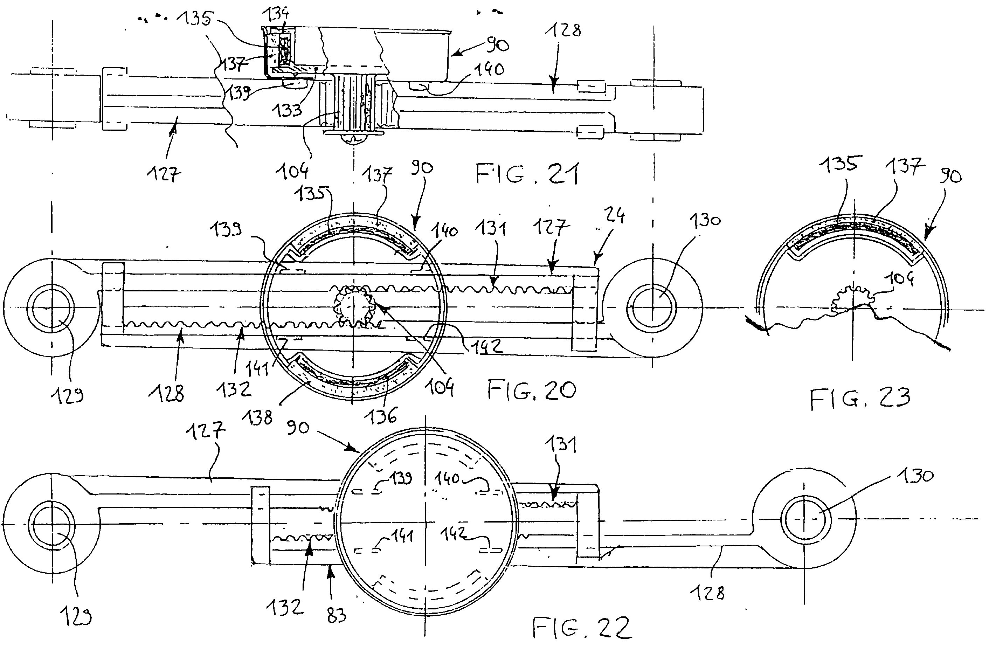

Referring now to Figures 20 to 23, these can be noticed to illustrate the oscillation control arrangement according to the present invention in a third embodiment thereof, in which it can be noticed that said arrangement is again constituted by the same component parts as the afore described arrangement, so that the same reference numerals are again used to indicate such parts, while differing therefrom owing to the fact that in this case each vibration damper 24 is provided with two similar rods 127 and 128 having a smaller thickness with respect the the afore described rod, wherein said rods are inserted in the hollow casing 83 through the respective free end portions thereof so as to be able to reciprocatingly slide within said casing in a counter-direction with respect to each other. Said rods are further provided, at an end portion thereof, with a respective through-aperture 129 and 130 for fastening to the machine, as seen in connection with the afore described arrangements, and a respective mutually facing rack portions 131 and 132, so as to be able to engage the rotating pinion 104 which, hinged inside the case 90, is arranged therebetween. In this case, the same case 90 is fixed centrally along the vibration damper and forms the metal bell.

The above cited pinion 104 is firmly associated to a pair of elongated expansion pieces 133 and 134 that are housed inside said case-bell 90 and are appropriately shaped so as to be able to accomodate respective corresponding centrifugal masses 135 and 136 of metal material, wherein said masses are associated to said expansion pieces through a possible compression spring (not shown) acting on the same masses so as to compress them in the same way as described above against respective circular sectors 137 and 138 opposing them, which are made of a suitable anti-friction material, such as for instance grease-impregnated polyurethane, applied against the inner surface of said case-bell, thereby performing the same additional braking action as described in connection with the afore illustrated embodiment.

The above cited compression spring may also be omitted if each said circular sector is then made to an appropriate thickness so as to be able to always ensure an adequate contact against the bell and the corresponding centrifugal mass.

Figures 20 and 21 illustrate the above embodiment of the oscillation control arrangement according to the present invention, as shown in a resting condition thereof, ie. in the presence of oscillatory displacements of the drum-tub assembly that do not exceed a given intensity, in which the two mutually opposed rods 127 and 128 are not sliding and are therefore fully retracted in the hollow casing 83. Under these conditions, therefore, the centrifugal masses 135 and 136 do not expand and are still compressed against the braking sectors 137 and 138 with a pre-established compression force.

Figures 22 and 23 on the contrary illustrate the above oscillation control arrangement as shown in a working position thereof, ie. in the presence of oscillatory displacements of the drum-tub assembly with an intensity that is greater than the above cited sub-critical one, in which the two rods 127 and 128 are caused to slide reciprocatingly in the hollow casing 83 and are extracted therefrom, ie. a condition in which the centrifugal masses 135 and 136 expand to a different extent in accordance with the intensity of said oscillatory displacements and are thereby further compressed against the braking sectors 137 and 138 (see Figure 23).

In order to avoid any rotation of the case-bell owing to the high braking forces generated during the expansion of the centrifugal masses 135 and 136, the oscillation control arrangement according to the present invention is further provided with appropriate retaining means 139, 140 and 141, 142 attached to the bell and slightly protruding therefrom, adapted to abut against the outer surface of the hollow casing 83.

## Claims

1. Arrangement for controlling the oscillations of the drum-tub assembly of a washing machine, in particular a household clothes washing machine with a drum capable of being driven to rotate at high spin-extraction speeds, comprising an outer cabinet sustaining said drum-tub assembly by means of upper suspension springs and lower vibration dampers provided between said tub and the base of said outer cabinet and constituted respectively by at least an innerly hollow casing and at least a rod adapted to reciprocatingly slide within said hollow casing, **characterized in that** said vibration dampers (24) are associated with supplementary braking means (60, 61, 62, 63; 65, 67, 68; 60, 61, 74, 75; 78, 79; 65, 76; 118, 119; 135, 136) to bring about an additional braking action on said drum-tub assembly, further to the one produced by said vibration dampers (24), according to the actual intensity of the oscillatory displacements of the same assembly.

2. Oscillation control arrangement according to claim 1, **characterized in that** hollow casing (26) is formed by a first and a second half-shell (31, 32) of plastic material, in which said half-shells are shaped in a rectilinear, elongated box-like manner, are similar to and symmetrical with respect to each other and are adapted to be joined to each other in a per sè known manner, and in which an end portion thereof is open so as to enable the rod (27) to be inserted in the inner cavity defined therebetween, and a closed end portion thereof is provided with a transversal through-aperture (33) for the passage therethrough of corresponding bushes (34, 35) and at least a trunnion (36) provided to join said casing (26) to said base (25) of the outer cabinet, said first and second halt-shells (31, 32) being shaped externally with a recessed portion, in such a manner as to define a respective projecting surface (38) on their inside, in which there is provided a corresponding receding seat (39) in correspondence of said open end portion to accomodate at least a respective slab (40) of grease-impregnated microcellular polyurethane or any other suitable anti-friction material, such a slab being thereby capable of being arranged flush with the corresponding inner projecting surface (38), as well as to define a case (41) along one of the longitudinal edges thereof, in which at least a recessing seat (46) is defined.

3. Oscillation control arrangement according to claim 2, **characterized in that** said rod (27) is made out of a single piece (47) having a box-like rectilinear and elongated shape and provided externally with a recessing portion extending almost throughout the longitudinal extension thereof, with a cross-sectional profile in the shape of a double T, thereby forming corresponding recessing seats (48) adapted to accomodate a respective metal strip (49) opposing both said inner projecting surfaces (38) and the friction slabs (40) and adapted to come into contact with the latter during the reciprocatingly sliding movement of said rod (27) within said first and second half-shells (31, 32), in which said rod (27) is furthermore provided at its free end portion with a transversal through-aperture (50) for the passage therethrough of corresponding bushes (51, 52) and at least a trunnion (53) provided to join the same rod to the lower portion of said tub (22), as well as with at least a rack (55) along its longitudinal edge facing said case (41).

4. Oscillation control arrangement according to claim 3, **characterized in that** said supplementary braking means comprise at least a metal disk (60, 61, 65) hinged on in said case (41) and housed in the recessing seat (46) thereof, in which said at least a disk (60, 61, 65) is actuated rotatably by the reciprocating movement of said rod (27) through thereto coaxial motion transmission means (pinion 58) engaging said rack portion (55), said supplementary braking means being further arranged between at least two fixed polar pieces (62, 63; 67, 68; 78, 79) of electromagnetic means (64) housed in said recessing seat (46) and supplied by control means (29) operatively connected with sensor means (28) of a per sè known type adapted to detect the oscillatory displacements of said drum-tub assembly when said drum is driven to rotate at the various washing and spin-extraction speeds thereof, said electromagnetic means being therefore capable of being so supplied at variable power levels depending on the electric signals generated by said sensor means (28) in accordance with the intensity of the oscillatory displacements of said drum-tub assembly.

5. Oscillation control arrangement according to claim 4, **characterized in that** said at least a disk (60, 61, 65) has such a diameter as to be able to rotate at a peripheral speed that is greater than the sliding speed of said rod (27).

6. Oscillation control arrangement according to any of the preceding claims, **characterized in that** said at least a disk (60, 61, 65) is made of metal material, preferably copper or aluminium.

7. Oscillation control arrangement according to any of the preceding claims, **characterized in that** said at least a disk (60, 61, 65) is made of a material with a high coercive force, such as for instance a hysteretic nickel-aluminium steel alloy or a FeCrCo alloy (eg. Crovac alloy).

8. Oscillation control arrangement according to any of the preceding claims, **characterized in that** said polar pieces (67, 68) are provided in a mutually staggered arrangement along the circumference of a respective fixed polar disk (69, 70) so as to embrace said electromagnetic means (64) from both sides thereof, and are housed in the seat of said case (41), in which said polar pieces (67) are staggered and arranged between the one and the other one of the polar pieces (68) thereby defining a cross-pole configuration of the Lundell type.

9. Oscillation control arrangement according to any of the preceding claims, **characterized in that** said electromagnetic means (64) are associated to friction means (76) adapted to cooperate with said at least a disk (60, 61, 65) or said metal strips (49) of said rod (27).

10. Oscillation control arrangement according to claim 9, **characterized in that** said friction means (76) are sustained by mutually opposing cores (74, 75) of said electromagnetic means (64), as biased by counter spring means (77).

11. Oscillation control arrangement according to claim 9, **characterized in that** said friction means (76) are facing said at least a disk (60, 61, 65) that is made of a ferromagnetic material.

12. Oscillation control arrangement according to claim 9, **characterized in that** said friction means (76) are sustained by a moving core (80) of said electromagnetic means (64) and the body (81) thereof, respectively.

13. Oscillation control arrangement according to claim 9, **characterized in that** said friction means (76) are provided on lever means (82) connected with said electromagnetic means (64).

14. Oscillation control arrangement according to claim 1, **characterized in that** said hollow casing (83) is formed by a first and a second mutually symmetrical half-shells (84, 85) of plastic material in a rectilinear, elongated box-like shape, which are adapted to be joined to each other in a per sè known manner, and with one or both end portions thereof open so as to enable a corresponding (86; 127, 128) to be inserted in the inner cavity defined therebetween, said first and second half-shells (84, 85) having a recessed shape and defining at least a case (90) along the longitudinal edges thereof, in which at least an inner seat (95) is provided.

15. Oscillation control arrangement according to claim 14, **characterized in that** said first and second half-shells (84, 85) are provided with the opposite closed end portion that is provided with a transversal through-aperture (87) for the passage therethrough of corresponding bushes and at least a trunnion (88) provided to join said hollow casing (83) to the base (25) of the outer cabinet of the machine.

16. Oscillation control arrangement according to claim 14, **characterized in that** said rod (86; 127, 128) is made out of a single piece (96) having a box-like rectilinear and elongated shape, and is provided externally with a recessing portion extending almost throughout the longitudinal extension thereof with a cross-sectional profile in the shape of a double T, said rod (86; 127, 128) being furthermore provided at its free end portion with a respective transversal through-aperture (99; 129, 130) for the passage therethrough of corresponding bushes and at least a trunnion (100) provided to join the same rod between said tub (22) and said base (25) of the outer cabinet, said rod (86; 127, 128) being further provided with a rack portion (101; 131, 132) along its longitudinal edge facing said case (90).

17. Oscillation control arrangement according to claim 16, **characterized in that** said supplementary braking means are of the centrifugal action type and comprise at least a pair of elongated expansion pieces (106, 107; 133, 134) which are similar to each other and housed hingedly in the case (90), as well as provided integral with at least a rotating pinion (104) engaging said rack portion (101; 131, 132), said elongated expansion pieces (106, 107; 133, 134) being axially spaced from each other and extending orthogonally and radially, so that their respective curved free end portions (114, 115; 116, 117) are at a slight distance from the opposite inner circular walls of said case (90), and being further adapted to accomodate between them at least a centrifugal mass (118, 119; 135, 136) of a special material with a high coefficient of friction, which is biased by spring means (120, 121) against at least a metal bell (122) attached along the inner walls of said case (90), and is adapted to expand with differing forces under the action of the centrifugal force, thereby being additionally compressed against said bell (122), and exerting in this way a supplementary braking action, depending on the intensity of the oscillatory dipslacements of said drum-tub assembly during the rotation of said drum (22').

18. Oscillation control arrangement according to claim 17, **characterized in that** said centrifugal mass (135, 136) is biased against at least a corresponding circular sector (137, 138) which opposes the same mass, is made oa an anti-friction material, such as eq. grease-impregnated polyurethane, applied onto the inner surface of said bell performing also as case (90).

19. Oscillation control arrangement according to claim 18, **characterized in that** said bell-case is provided with retaining means (139, 140, 141, 142) the protrude slightly therefrom and are adapted to prevent it from rotating by abutting against said hollow casing (83).
